# EUROPEAN PATENT APPLICATION

(11) **EP 1 681 757 A1**
(43) Date of publication of application: **19.07.2006**
(21) Application number: 04799667.3
(22) Date of filing: 05.11.2004
(51) Int. Cl.: H02K 21/14, H02K 29/06, B62D 5/04

(54) **ELECTRIC POWER STEERING DEVICE AND METHOD OF PRODUCING THE SAME**

(30) Priority: 05.11.2003 JP 2003375874
(71) Applicant: JTEKT CORPORATION, Chuo-ku Osaka-shi Osaka 542-8502 (JP)
(72) Inventor: MATSUBARA, Ken, c/o JTEKT Corporation, Osaka-shi Osaka 5420081 (JP)
(74) Representative: Steil, Christian
(86) International application number: PCT/JP2004/016817
(87) International publication number: WO 2005/055398

(57) **Abstract**

An electric power steering device (1) includes a steering assist electric motor (7) including a rotation shaft (8) and a motor housing (18). The electric motor (7) includes a stator (19) fixed to the motor housing (18), a rotor (20) co-rotatable with the rotation shaft (8), and rotation angle detecting means (21) for detecting the rotation angle of the rotor (20) . The rotation angle detecting means (21) includes a stationary portion (28) fixed to the motor housing (18), and a movable portion (29) co-rotatable with the rotor (20). The rotor (20) includes a rotor body (31), and a rotor magnet (32) attached to the rotor body (31) in a co-rotatable manner. A rotor unit (33) including the rotor (20) and the movable portion (29) of the rotation angle detecting means (21) is provided as a subassembly of the electric motor (7) .

## Description

### TECHNICAL FIELD

The present invention relates to an electric power steering device for a motor vehicle and a production method for the same.

### BACKGROUND ART

An electric power steering device having an electric motor for providing a steering assist force is disclosed, for example, in Japanese Unexamined Patent Publication No. 2001-278078 laid open on October 10, 2001 by the Japanese Patent Office. An electric power steering device of this, type is also disclosed in Japanese Unexamined Patent Publication No. 2003-113909 laid open on April 18, 2003 by the Japanese Patent Office.

The electric motor of the latter electric power steering device includes a rotor magnet and a stator. A resolver for detecting the rotation angle of a rotation shaft of the electric motor is provided for driving the electric motor. The resolver includes a movable portion co-rotatable with the rotation shaft of the electric motor, and a stationary portion fixed to a motor housing of the electric motor.

When the latter electric power steering device is assembled, the rotor magnet in a magnetized state is first incorporated in the stator in the housing. Then, the resolver is incorporated in the housing in which the rotor magnet and the stator are incorporated.

However, it is very difficult to position the movable portion of the resolver with respect to the rotor magnet after the assembling. As a result, the assembling of the electric power steering device is troublesome.

It is an object of the present invention to provide an electric power steering device and a production method for the electric power steering device, which ensure easier assembling of the device.

### DISCLOSURE OF THE INVENTION

According to a preferred mode of the present invention to achieve the aforesaid object, an electric power steering device comprises a steering assist electric motor including a rotation shaft, and a speed reduction mechanism for transmitting rotation of the rotation shaft of the electric motor to a steering mechanism while reducing the rotation speed of the rotation shaft. The electric motor includes a motor housing, a stator fixed to the motor housing, a rotor co-rotatable with the rotation shaft, and rotation angle detecting means for detecting the rotation angle of the rotor. The rotation angle detecting means includes a stationary portion fixed to the motor housing, and a movable portion co-rotatable with the rotor. The rotor includes a rotor body, and a rotor magnet attached to the rotor body in a co-rotatable manner. A rotor unit including the rotor and the movable portion of the rotation angle detecting means is provided as a subassembly of the electric motor.

According to this mode, the movable portion of the rotation angle detecting means can be easily positioned with respect to magnetic poles of the rotor magnet solely in the rotor unit. After the completion of the positioning, the rotor unit is incorporated in the motor housing. Therefore, there is no need to perform a troublesome positioning operation for positioning the movable portion of the rotation angle detecting means with respect to the magnetic poles after the assembling. As a result, the assembling of the electric motor is facilitated and, hence, effort required for the assembling of the electric power steering device can be saved.

### BRIEF DESCRIPTION OF THE DRAWINGS

Fig. 1 is a schematic partial sectional view illustrating the schematic construction of an electric power steering device according to one embodiment of the present invention;
Fig. 2 is an exploded sectional view of the electric power steering device of Fig. 1;
Fig. 3 is a side view of a steering assist electric motor; and
Figs. 4A to 4F are process diagrams illustrating a process for assembling the electric motor.

### BEST MODE FOR IMPLEMENTING THE INVENTION

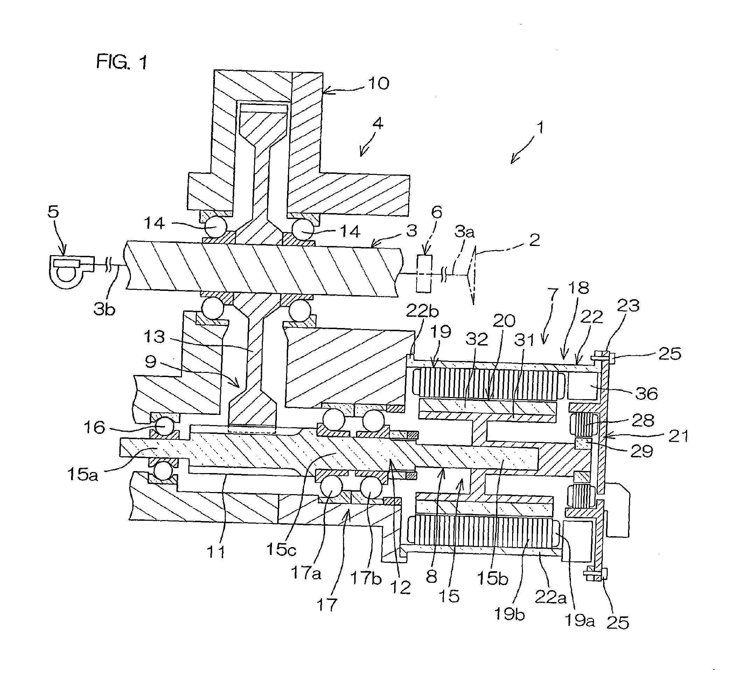

An embodiment of the present invention will hereinafter be described in detail with reference to the attached drawings. Fig. 1 is a sectional view illustrating the schematic construction of an electric power steering device according to the embodiment of the present invention.

The electric power steering device 1 includes a steering shaft 3 which transmits a steering torque applied to a steering wheel 2 for steering vehicle wheels (not shown), and a steering column 4 which rotatably supports the steering shaft 3 therein. The steering wheel 2 is coupled to one end 3a of the steering shaft 3, and a steering mechanism 5 for steering the vehicle wheels is coupled to the other end 3b of the steering shaft 3 via an intermediate shaft (not shown). When the steering wheel 2 is operated, the steering torque applied to the steering wheel 2 is transmitted to the steering mechanism 5 via the steering shaft 3 and the like for steering the vehicle wheels.

The electric power steering device 1 provides a steering assist force according to a steering resistance generated by the steering operation. That is, the electric power steering device 1 includes a torque sensor 6 provided in association with the steering shaft 3 for detecting the steering torque, and an electric motor 7 which generates the steering assist force based on an output signal from the torque sensor 6, a vehicle speed signal and the like. The electric power steering device 1 includes a speed reduction mechanism 9 which transmits rotation of a rotation shaft 8 of the electric motor 7 to the steering mechanism 5 via the steering shaft 3 while reducing the rotation speed of the rotation shaft 8, and a housing 10 which accommodates and supports the speed reduction mechanism 9. The housing 10 supports a motor housing 18 of the electric motor 7 to be described later. The housing 10 is constituted by a plurality of components (not shown).

When the steering wheel 2 is operated, the electric motor 7 of the electric power steering device 1 generates the steering assist force according to the result of the detection of the torque by the torque sensor 6 and the result of the detection of the vehicle speed by a vehicle speed sensor not shown. Together with an operation force applied from the steering wheel 2, the steering assist force is transmitted to the steering mechanism 5, whereby the vehicle wheels are steered.

The speed reduction mechanism 9 includes a driving gear 11, an input shaft 12 co-rotatably provided with the driving gear 11, and a driven gear 13 meshed with the driving gear 11. More specifically, the driving gear 11 is a helical gear having a smaller diameter. The driven gear 13 is a helical gear having a greater diameter and meshed with the smaller diameter helical gear so as to be driven at a reduced speed. The driven gear 13 is co-rotatably coupled to the steering shaft 3 as an output shaft of the speed reduction mechanism 9. The steering shaft 3 is rotatably supported by the tubular housing 10 via bearings 14.

The input shaft 12 is formed integrally with the driving gear 11 and with the rotation shaft 8 of the electric motor 7. The input shaft 12 of the speed reduction mechanism 9 and the rotation shaft 8 of the electric motor 7 are provided as a single unitary member to constitute a unitary shaft 15.

The driving gear 11 is formed around the unitary shaft 15 in the vicinity of a first end portion 15a of the unitary shaft 15. The first end portion 15a of the unitary shaft 15 is rotatably supported by a bearing 16 (e.g., a deep groove ball bearing). A second end portion 15b of the unitary shaft 15 is a free end. An intermediate portion 15c of the unitary shaft 15 between the first and second end portions 15a and 15b is rotatably supported by a combination angular ball bearing 17.

The combination angular ball bearing 17 includes a pair of angular ball bearings 17a, 17b combined in back-to-back relation, and is disposed between the driving gear 11 and the electric motor 7. Outer rings of the respective combined angular ball bearings 17a, 17b contact each other. The combination angular ball bearing 17 is capable of radially and axially supporting the unitary shaft 15 with a high rigidity. Axial movement of the outer rings of the respective combined angular ball bearings 17a, 17b is restricted with respect to the housing 10. Axial movement of inner rings of the respective combined angular ball bearings 17a, 17b is restricted with respect to the unitary shaft 15. Thus, axial movement of the unitary shaft 15 is restricted with respect to the housing 10.

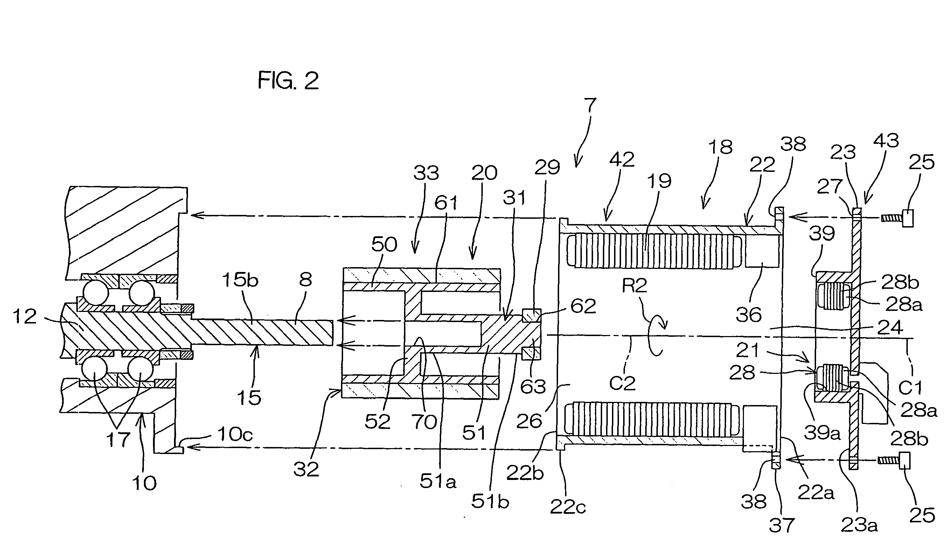

Fig. 2 is an exploded view of the speed reduction mechanism and the electric motor. A reference is made to Figs. 1 and 2.

The electric motor 7 includes the motor housing 18, a stator 19 fixed to the motor housing 18, the rotation shaft 8 for output, a rotor 20 co-rotatable with the rotation shaft 8, and a resolver 21 as rotation angle detecting means for detecting the rotation angle of the rotor 20. The electric motor 7 is a brushless motor.

The motor housing 18 is supported by the housing 10, and accommodates the stator 19, the rotation shaft 8, the rotor 20 and the resolver 21. The motor housing 18 includes a tubular body 22 having first and second ends 22a, 22b, and an end cover 23 attachable to the body 22.

The body 22 has an opening 24 at the first end 22a thereof for receiving a stationary portion 28 of the resolver 21 introduced into the body 22. The opening 24 is closed by the end cover 23, which is fixed to the first end 22a of the body 22 by screws 25.

The body 22 has an outwardly projecting annular flange 37 provided at the first end 22a thereof. The annular flange 37 has a plurality of screw holes 38 (see Fig. 2). The end cover 23 has a plurality of screw insertion holes 27 in association with the respective screw holes 38. The screws 25 are respectively screwed into the screw holes 38 at the first end 22a of the body 22 through the corresponding screw insertion holes 27 of the end cover 23.

The body 22 has an opening 26 at the second end 22b thereof for receiving a rotor unit 33 introduced into the body 22. The second end 22b of the body 22 and the housing 10 respectively have engagement portions 22c, 10c engageable with each other. With the engagement portion 22c of the body 22 in engagement with the engagement portion 10c of the housing 10, the tubular body 22 is positioned coaxially with the tubular housing 10. The body 22 of the motor housing 18 is fixed to the housing 10 of the speed reduction mechanism 9 in a coaxially positioned state.

The resolver 21 includes the annular stationary portion 28 which is positioned radially and circumferentially and fixed to the end cover 23 of the motor housing 18, and an annular movable portion 29 co-rotatable with the rotor 20. The resolver 21 is, for example, of a reluctance type, and is capable of detecting the rotation angle of the movable portion 29 with respect to the stationary portion 28. The stationary portion 28 includes a plurality of cores 28a fixed to the end cover 23, and coils 28b respectively wound around the cores 28a. The plurality of cores 28a are annularly arranged around the movable portion 29. A magnetization circuit is provided by the movable portion 29 and the stationary portion 28.

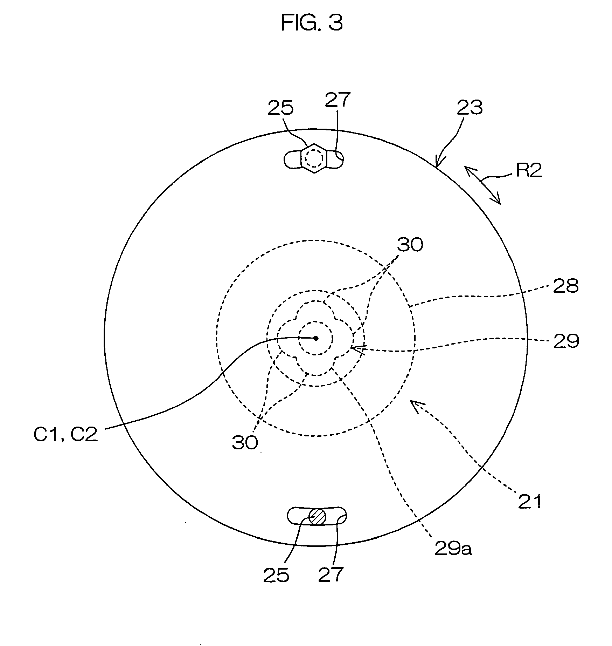

As shown in Fig. 3, the movable portion 29 has a non-circular outer periphery 29a including a plurality of projections 30 (e.g., four projections 30).

As shown in Fig. 3, the end cover 23 is composed of a round plate. The screw insertion holes 27 are elongate holes which are elongated circumferentially of the end cover 23 . More specifically, the screw insertion holes 27 each have an arcuate shape concentric with the center C1 of the end cover 23. A retention portion 39 is provided on a back surface 23a of the end cover 23 for retaining the stationary portion 28 of the resolver 21 concentrically with the center C1 of the end cover 23. The retention portion 39 is a tubular projection concentric with the center C1 of the end cover 23, and the stationary portion 28 of the resolver 21 is disposed along an inner peripheral surface 39a of the retention portion 39.

The position of the end cover 23 can be adjusted circumferentially R2 of the body 22. That is, the screws 25 respectively inserted in the screw insertion holes 27 of the end cover 23 are slightly screwed into the screw holes 38 of the body 22 of the motor housing 18, whereby the end cover 23 is retained with the center C1 thereof in alignment with the center C2 of the body 22. Thus, the end cover 23 is displaceable circumferentially R2 of the body 22 with the center C1 of the end cover 23 in alignment with the center C2 of the body 22.

More specifically, the end cover 23 is guided to be displaced circumferentially R2 of the body 22 by the engagement of the screw insertion holes 27 defined as a to-be-guided portion of the end cover 23 with the screws 25 defined as a guiding portion. With this guiding arrangement, the positions of the end cover 23 and the stationary portion 28 of the resolver 21 are adjustable circumferentially R2 of the body 22. After the adjustment, the screws 25 are tightly screwed into the screw holes 38 of the body 22, whereby the end cover 23 is fixed in the adjusted position.

Referring to Fig. 2, the rotor 20 includes an annular rotor body 31 fitted around the rotation shaft 8, and a rotor magnet 32 attached to the rotor body 31 in a co-rotatable manner. The rotor magnet 32 has an annular shape as surrounding the rotor body 31. The rotor magnet 32 has a plurality of magnetic poles on its outer peripheral surface. The poles include N-poles and S-poles alternately arranged circumferentially of the rotor magnet 32.

The rotor body 31 includes an outer tubular portion 50, a shaft portion 51 disposed coaxially with the outer tubular portion 50, and a connection portion 52 connecting an axially middle portion of the outer tubular portion 50 to the shaft portion 51.

The tubular rotor magnet 32 is fitted around the outer tubular portion 50. The outer tubular portion 50 has a first engagement portion 61 on the outer peripheral surface thereof for engagement with an inner peripheral surface of the rotor magnet 32 fitted around the outer tubular portion by bonding.

The shaft portion 51 has a first end portion 51a disposed within the outer tubular portion 50, and a second end portion 51b projecting outside the outer tubular portion 50. The first end portion 51a of the shaft portion 51 is connected to the outer tubular portion 50 via the connection portion 52 within the outer tubular portion 50. The shaft portion 51 has a coupling portion 70 provided in the first end portion 51a thereof for coupling the rotation shaft 8 to the shaft portion 51. The coupling portion 70 is an engagement hole formed coaxially with the shaft portion 51, and the rotation shaft 8 is press-fitted in the engagement hole.

The shaft portion 51 includes a second engagement portion 62 provided around the second end portion 51b for engagement with the annular movable portion 29 of the resolver 21. The second end portion 51b of the shaft portion 51 has a smaller diameter portion 63, which is press-fitted in the movable portion 29. The second engagement portion 62 is defined by an outer peripheral surface of the smaller diameter portion 63.

The first engagement portion 61 for engagement with the rotor magnet 32 and the second engagement portion 62 for engagement with the movable portion 29 are spaced a predetermined distance from each other axially and radially of the rotor body 31. Thus, a spatial distance between the first engagement portion 61 and the second engagement portion 62 is increased. The first end portion 51a of the shaft portion 51 is connected to the outer tubular portion 50 having the first engagement portion 61 via the connection portion 52, and the second engagement portion 62 is provided on the second end portion 51b of the shaft portion 51. Thus, a connection distance between the first engagement portion 61 and the second engagement portion 62 is increased. Therefore, when the rotor magnet 32 is magnetized, an adverse influence exerted on the movable portion 29 is minimized.

In this embodiment, the unitary rotor unit 33 is provided, which includes the rotor 20 and the movable portion 29 of the resolver 21 . The rotor unit 33 is defined as a first subassembly which can be handled solely and independently from other components such as the rotation shaft 8 and the stator 19. The rotation shaft 8 is attached to the rotor unit 33 as the first subassembly. Further, the rotor unit 33 is incorporated in the stator 19.

The stator 19 has a plurality of cores 19b around which coils 19a are respectively wound. These cores 19b are arranged around the rotor magnet 32. The stator 19 and the rotor magnet 32 are coaxially disposed in opposed relation with a predetermined radial clearance provided therebetween.

In the case of the brushless motor, for example, magnetization timing control for the stator 19 should be performed according to the positions of the magnetic poles of the rotor magnet 32 with respect to the stator 19. Therefore, the stationary portion 28 of the resolver 21 is positioned with respect to the stator 19 by positioning the movable portion 29 of the resolver 21 with respect to the magnetic poles of the rotor magnet 32 in this embodiment.

Next, an assembling process for the electric power steering device 1 will be described. First, the speed reduction mechanism 9 is assembled. As shown in Fig. 2, the unitary shaft 15 and the combination angular ball bearing 17 are attached to the housing 10. A second subassembly 42 is prepared by attaching the stator 19 to the body 22 of the motor housing 18 in proper axial and circumferential positional relation. A third subassembly 43 is prepared by attaching the stationary portion 28 of the resolver 21 to the end cover 23 of the motor housing 18. Further, the rotor unit 33 as the first subassembly is assembled in the following manner.

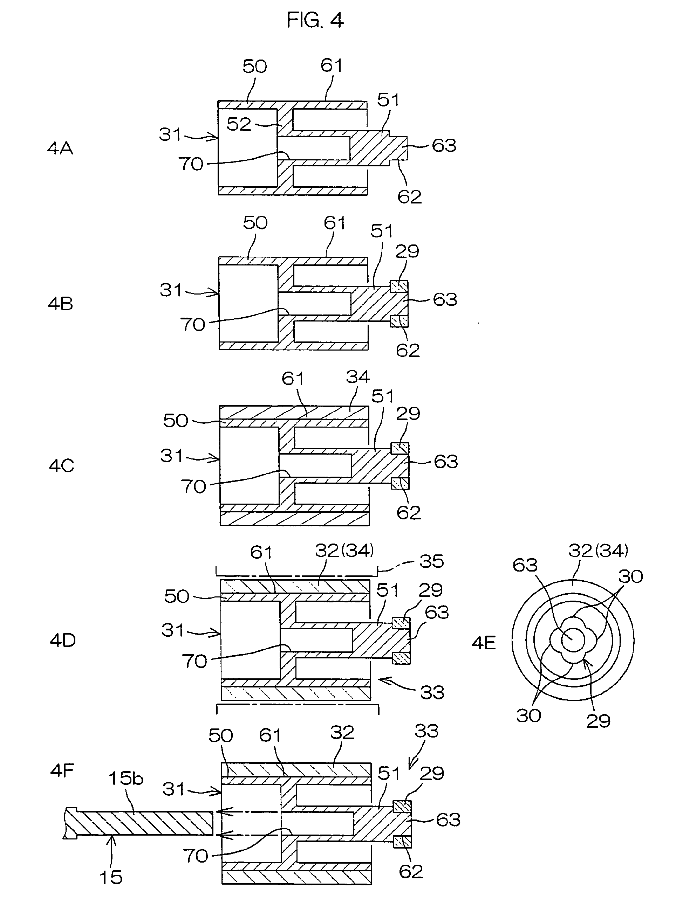

As shown in Fig. 4A and 4B, the movable portion 29 of the resolver 21 is fixed to the second engagement portion 62 of the rotor body 31 by press-fitting the second engagement portion 62 of the rotor body 31 into the movable portion 29.

Then, as shown in Fig. 4C, a magnetizable member 34 as a production intermediate member for the rotor magnet 32 is fitted around the first engagement portion 61 of the rotor body 31, and fixed to the first engagement portion 61 of the rotor body 31 by bonding.

Referring to Figs. 4D and 4E, the magnetizable member 34 is magnetized with reference to the movable portion 29 to provide the rotor magnet 32.

More specifically, the peripheral projections 30 of the movable portion 29 are utilized as reference portions to be referenced for the magnetization of the magnetizable member 34. A magnetizer 35 is disposed around the magnetizable member 34 and positioned with respect to the projections 30. For example, a positioning jig (not shown) to be mechanically engaged with the projections 30 and the magnetizer 35 may be used. The magnetizable member 34 has an annular shape, and is magnetizable at any circumferential positions thereof. The magnetic poles are formed at predetermined plural positions with reference to the positions of the projections 30 by the magnetizer 35. Thus, the rotor magnet 32 is provided, whereby the rotor unit 33 is completed.

As shown in Fig. 4F, the second end portion 15b of the unitary shaft 15 supported by the housing 10 is press-fitted in the engagement hole (the coupling portion 70) of the rotor body 31 of the rotor unit 33 thus assembled, whereby the rotor unit 33 is attached to the unitary shaft 15.

The body 22 to which the stator 19 is attached (corresponding to the aforesaid second subassembly 42) may be attached to the housing 10 before the rotor unit 33 as the first subassembly is attached to the unitary shaft 15 supported by the housing 10 or after the rotor unit 33 is attached to the unitary shaft 15. In the former case, the rotor unit 33 is attached to the unitary shaft 15 through the opening 24 at the first end 22a of the body 22. Since the closing of the opening 24 for the incorporation of the rotor unit 33 and the attachment of the stationary portion 28 of the resolver 21 to the body 22 are simultaneously achieved, the assembly process is facilitated.

Subsequently, as shown in Fig. 2, the end cover 23 to which the stationary portion 28 of the resolver 21 is fixed (corresponding to the third subassembly 43) is attached to the first end 22a of the housing body 22.

As described above, the position of the end cover 23 is adjusted by displacing the end cover 23 held by the body 22 circumferentially R2 of the body 22 when the end cover 23 is attached to the first end 22a. Thus, positional relation between the stationary portion 28 and the stator 19 is properly adjusted.

Prior to the adjustment of the position of the end cover 23, the magnetic poles of the rotor magnet 32 are positioned with respect to the movable portion 29 of the resolver 21, the stator 19 is positioned with respect to the body 22 of the motor housing 18, and the stationary portion 28 of the resolver 21 is positioned with respect to the end cover 23 of the motor housing 18. Therefore, the body 22 of the motor housing 18 is positioned with respect to the end cover 23 so as to accommodate errors occurring in these positioning operations. Accordingly, the positional adjustment is easily performed, for example, with fine adjustment.

In the aforementioned assembling process, the rotor unit 33 is attached to the unitary shaft 15 incorporated in the body 22 of the motor housing 18 without limitation. For example, the rotor unit 33 may be attached to the unitary shaft 15 before the unitary shaft 15 is incorporated in the motor housing 18, and then the rotor unit 33 attached to the unitary shaft 15 may be incorporated in the motor housing 18 through the opening 26 of the body 22.

In this embodiment, the provision of the rotor unit 33 facilitates the positioning of the movable portion 29 with respect to the magnetic poles of the rotor magnet 32 solely in the rotor unit 33. After the completion of the positioning, the rotor unit 33 is incorporated in the motor housing 18. There is no need for the troublesome positioning between the movable portion 29 of the resolver 21 and the magnetic poles of the rotor magnet 32 after the incorporation, thereby facilitating the assembling of the electric motor 7. Thus, effort required for the assembling of the electric power steering device 1 can be saved.

Further, the magnetizable member 34 is magnetized with reference to the positions of the projections 30 (reference portions) of the movable portion 29 of the resolver 21 solely in the rotor unit 33, whereby the movable portion 29 of the resolver 21 can be easily and accurately positioned with respect to the magnetic poles of the rotor magnet 32. Therefore, the assembling of the electric motor 7 is further facilitated.

By magnetizing the magnetizable member 34 with reference to the reference portions, the positioning of the movable portion 29 of the resolver 21 with respect to the magnetic poles of the rotor magnet 32 and the magnetization can be simultaneously achieved. Thus, effort required for the assembling can be saved.

The end cover 23 to which the stationary portion 28 of the resolver 21 is fixed is attached to the body 22 at the final stage of the assembling process. With the end cover 23 retained by the body 22, the position of the end cover 23 can be adjusted with respect to the body 22. Therefore, the positional relation between the stationary portion 28 of the resolver 21 and the stator 19 can be easily and properly adjusted without removing the end cover 23 at the final stage of the assembling process.

If the input shaft 12 and the rotation shaft 8 were separately provided, a joint (not shown) for connecting the input shaft 12 to the rotation shaft 8 and four or more bearings for supporting the input shaft 12 and the rotation shaft 8 would be required. In this embodiment, on the contrary, the unitary shaft 15 including the input shaft 12 and the rotation shaft 8 unitarily provided is employed, so that the aforesaid joint is not required and the number of the bearings is reduced. As a result, the number of components can be reduced, and the effort required for the assembling of the electric motor 7 can be further saved.

Further, the intermediate portion 15c of the unitary shaft 15 is supported by the combination angular ball bearing 17. Therefore, even if the minimum number of bearings (two bearings including the deep groove ball bearing 16 and the combination angular ball bearing 17 in this embodiment) is used, the unitary shaft 15 has high support rigidity. As a result, the unitary shaft 15 can be supported at two positions to be cantilevered without provision of a bearing for supporting the second end portion 15b of the unitary shaft 15.

Further, the outer rings of the pair of combined angular ball bearings 17a, 17b of the combination angular ball bearing 17 are arranged in back-to-back relation. That is, the use of the combination angular ball bearing 17 in back-to-back arrangement increases the support rigidity against flexure.

The assembling method employed in this embodiment is such that the magnetization is performed on the rotor unit 33 to which the movable portion 29 is attached and the rotor unit 33 is incorporated in the motor housing 18 after the magnetization. In the electric motor 7 assembled by this assembling method, the movable portion 29 of the resolver 21 is assuredly and easily positioned with respect to the magnetic poles of the rotor magnet 32 solely in the rotor unit 33, whereby effort required for the positioning can be saved. Further, the rotor unit 33 with the movable portion 29 and the rotor magnet 32 thus positioned with respect to each other is incorporated in the motor housing 18. Therefore, the effort required for the assembling can be saved. Thus, the effort required for the assembling of the electric power steering device 1 can be saved by employing the electric motor 7.

By providing the resolver 21 at an end of the electric motor 7 adjacent to the end cover 23 (apart from the speed reduction mechanism 9), design flexibility for wiring from the resolver 21 can be increased. Further, wiring from the stationary portion 28 of the resolver 21 and wiring from the stator 19 are routed to the same axial side of the electric motor 7, whereby the wirings are disposed in close relation for space saving. Thus, effort required for the wiring can be saved. Further, the resolver 21 can be disposed in a space provided radially inward of an annular bus bar of a power supply member 36 for power supply to the stator 19. Thus, axial space saving can be achieved.

The present invention is not limited to the embodiment described above, but the embodiment may be modified in the following manners. In the assembling of the rotor unit 33, for example, it is conceivable to attach the magnetized rotor magnet 32 to the rotor body 31 to which the movable portion 29 of the resolver 21 is attached. It is also conceivable to first attach the magnetizable member 34 or the rotor magnet 32 to the rotor body 31 and then attach the movable portion 29 of the resolver 21 to the rotor body 31.

It is also conceivable to use a roll bearing or a deep groove ball bearing instead of the combination angular ball bearing 17 and to provide the input shaft 12 and the rotation shaft 8 as separate members instead of the unitary shaft 15 and couple the input shaft to the rotation shaft in co-rotatable manner by a joint (not shown) .

The resolver 21 may be fixed to the body 22 of the motor housing 18, or the resolver 21 may be disposed at an end of the electric motor 7 adjacent to the speed reduction mechanism 9. A resolver of a type having a coil in the movable portion 29 or a sensor such as a photoelectric or magnetic encoder capable of detecting a relative rotation angle between the movable portion 29 and the stationary portion 28, for example, is usable as the rotation angle detecting means instead of the aforesaid reluctance resolver 21.

Besides the pair of helical gears, a pair of flat spur gears, a combination of a worm shaft and a worm wheel, a thread mechanism and bevel gears may be used for the speed reduction mechanism 9.

The electric power steering device 1 of the column type in which the electric motor 7 is supported in the steering column 4 for driving the steering shaft 3 has been described by way of example, but the electric power steering device is not limited to the column type. For example, the invention is applicable to an electric power steering device of a type in which an electric motor is supported by a housing of a steering mechanism for driving a rack shaft of the steering mechanism back and forth.

While the present invention has thus been described in greater detail by way of the specific embodiment thereof, skilled persons who have understood the foregoing will easily come up with variations, modifications and equivalents of the embodiment. Therefore, the scope of the present invention is defined by the appended claims and their equivalents.

This application corresponds to Japanese Patent Application No. 2003-375874 filed with the Japanese Patent Office on November 5, 2003, the disclosure of which is incorporated herein by reference.

## Claims

1. An electric power steering device comprising:
a steering assist electric motor including a rotation shaft; and
a speed reduction mechanism for transmitting rotation of the rotation shaft of the electric motor to a steering mechanism while reducing a rotation speed of the rotation shaft, wherein
the electric motor includes a motor housing, a stator fixed to the motor housing, a rotor co-rotatable with the rotation shaft, and rotation angle detecting means for detecting a rotation angle of the rotor,
the rotation angle detecting means includes a stationary portion fixed to the motor housing, and a movable portion co-rotatable with the rotor,
the rotor includes a rotor body, and a rotor magnet attached to the rotor body in a co-rotatable manner, and
a rotor unit including the rotor and the movable portion of the rotation angle detecting means, the rotor unit being provided as a subassembly of the electric motor.

2. An electric power steering device as set forth in claim 1, wherein
the movable portion of the rotation angle detecting means includes a reference portion serving as a reference for defining magnetized portions of the rotor magnet.

3. An electric power steering device as set forth in claim 2, wherein the reference portion serves as a reference to be employed for magnetizing a magnetizable member as a production intermediate member for the rotor magnet.

4. An electric power steering device as set forth in claim 2, wherein
the movable portion of the rotation angle detecting means has an annular shape, and
the reference portion includes projections provided on an outer periphery of the movable portion.

5. An electric power steering device as set forth in claim 1, wherein
the rotor body includes an outer tubular portion to which the rotor magnet is fixed, a shaft portion provided coaxially with the outer tubular portion and retaining the movable portion of the rotation angle detecting means, and a connection portion which connects the outer tubular portion and the shaft portion.

6. An electric power steering device as set forth in claim 5, wherein
the rotor magnet has a tubular shape, and
the outer tubular portion has a first engagement portion on an outer peripheral surface thereof for engagement with the rotor magnet fitted around the outer tubular portion.

7. An electric power steering device as set forth in claim 6, wherein
the shaft portion has a first end portion disposed in the outer tubular portion, and a second end portion axially projecting outside the outer tubular portion,
the first end portion of the shaft portion is connected to the outer tubular portion via the connection portion, and
the second end portion of the shaft portion has a second engagement portion for engagement with the movable portion of the rotation angle detecting means.

8. An electric power steering device as set forth in claim 7, wherein
the first end portion of the shaft portion has a coupling portion for coupling the rotation shaft of the electric motor to the shaft portion.

9. An electric power steering device as set forth in claim 1, wherein
the motor housing includes a tubular body having first and second ends and an opening provided at the first end, and an end cover attached to the first end of the body thereof to close the opening at the first end, and
the stationary portion of the rotation angle detecting means is fixed to the end cover.

10. An electric power steering device as set forth in claim 9, wherein
an attachment member is provided for attaching the end cover to the first end of the motor housing body in a manner such that a position of the end cover is adjustable circumferentially of the motor housing body.

11. An electric power steering device as set forth in claim 10, wherein
the attachment member includes a screw which is screwed into a screw hole formed in the motor housing body through a screw insertion hole formed in the end cover,
the end cover is guided to be displaced circumferentially of the motor housing body by cooperation of the screw insertion hole and the screw slightly screwed into the screw hole.

12. An electric power steering device as set forth in claim 11, wherein
the end cover has a center in alignment with a center of the motor housing body,
the screw insertion hole has an arcuate shape defined about the center of the end cover, and
the stationary portion of the rotation angle detecting means has an annular shape defined about the center of the end cover.

13. An electric power steering device as set forth in claim 9, wherein
an annular power supply member for power supply to the stator is attached to the first end of the motor housing body, and
the rotation angle detecting means is disposed radially inward of the power supply member.

14. An electric power steering device as set forth in claim 1, wherein
the speed reduction mechanism includes a driving gear and an input shaft co-rotatably provided with the driving gear, and
the input shaft of the speed reduction mechanism and the rotation shaft of the electric motor are provided unitarily as a unitary shaft.

15. An electric power steering device as set forth in claim 14, wherein
the unitary shaft includes a first end portion, a second end portion, and an intermediate portion between the first and second end portions, and
the intermediate portion of the unitary shaft is supported by a combination angular ball bearing.

16. An electric power steering device as set forth in claim 15, wherein
the combination angular ball bearing includes a pair of combined angular ball bearings, and
the pair of combined angular ball bearings are arranged in back-to-back relation.

17. An electric power steering device as set forth in claim 15, wherein
the unitary shaft is supported only by a bearing supporting the first end portion thereof and the combination angular ball bearing supporting the intermediate portion thereof.

18. An electric power steering device as set forth in claim 17, wherein
the bearing supporting the first end portion comprises a deep groove ball bearing.

19. A production method for an electric power steering device including:
a steering assist electric motor including a rotation shaft; and
a speed reduction mechanism for transmitting rotation of the rotation shaft of the electric motor to a steering mechanism while reducing a rotation speed of the rotation shaft, wherein
the electric motor includes a motor housing, a stator fixed to the motor housing, a rotor co-rotatable with the rotation shaft, and rotation angle detecting means for detecting a rotation angle of the rotor,
the rotation angle detecting means includes a stationary portion fixed to the motor housing, and a movable portion co-rotatable with the rotor,
the rotor includes a rotor body, and a rotor magnet attached to the rotor body in a co-rotatable manner, and
a rotor unit including the rotor and the movable portion of the rotation angle detecting means is provided as a subassembly of the electric motor,
the production method comprising the steps of:
assembling the rotor unit as the subassembly; and
incorporating the assembled rotor unit in the motor housing.

20. A production method for an electric power steering device as set forth in claim 19, wherein
the rotor magnet is provided by magnetizing a magnetizable member with reference to the movable portion of the rotation angle detecting means attached to the rotor body in the rotor unit assembling step.
